# EUROPEAN PATENT APPLICATION

(11) **EP 4 700 153 A1**
(43) Date of publication of application: **25.02.2026**
(21) Application number: 24195958.4
(22) Date of filing: 22.08.2024
(51) Int. Cl.: C25B 1/04, C01D 15/04, C01D 15/08, C25B 1/34, C25B 15/08

(54) **PROCESS FOR THE CONVERSION OF LITHIUM CARBONATE TO LITHIUM HYDROXIDE OR HIGHER PURITY LITHIUM CARBONATE**

(71) Applicant: Lifthium Energy, S.A., 2780-373 Oeiras (PT)
(72) Inventor: PACKER, Bart, 2780-373, Oeiras (PT); OURFALIAN, Aram, 2780-373, Oeiras (PT)
(74) Representative: Carpmaels & Ransford LLP

(57) **Abstract**

Electrolytic processes are provided for the conversion of lithium carbonate to high purity lithium hydroxide or higher purity lithium carbonate, which involve steps that recycle lithium after electrolysis in order to reduce lithium losses and increase the efficiency of the processes.

## Description

### FIELD

The present invention relates to electrolytic processes for the conversion of lithium carbonate to high purity lithium hydroxide or high purity lithium carbonate, which involve steps that recycle lithium after electrolysis in order to reduce lithium losses and increase the efficiency of the processes.

### BACKGROUND

There has recently been a significant increase in the interest in producing high purity, battery grade lithium hydroxide (LiOH) and lithium carbonate (Li₂CO₃) for use in lithium-ion rechargeable batteries. This has largely been due to the drive in many countries to move towards net zero carbon emissions over the next few decades, which requires increased production of electric vehicles to replace traditional, combustion engine fuelled vehicles. Additionally, there is a growing market for large-scale energy storage systems and portable electronic devices, which also contain lithium-ion batteries.

Lithium hydroxide is commonly used to make cathode materials for lithium-ion batteries. High performance batteries that have high energy density and long cycle life require high purity lithium hydroxide, which contains very low levels of impurities such as sodium, calcium or chlorides. The production of high purity lithium hydroxide and lithium carbonate from electrochemical processing of lithium chloride (LiCl) brines is known, with many such processes using natural brines such as those found under salt flats (salars) in South America as the primary lithium source. However, such brines typically contain very low concentrations of lithium (well under 1%) and need to be subjected to solar evaporation in solar evaporation ponds order to obtain a more concentrated solution of lithium chloride that can be processed into lithium hydroxide. Solar evaporation has various environmental downsides, including the fact that a lot of groundwater is lost in the process of creating the evaporation ponds, often in regions where water is already scarce.

Additionally, the electrochemical processes used to obtain lithium hydroxide and lithium carbonate are energy intensive and often involve the loss of lithium in various stages, which is especially undesirable in view of the low concentration of lithium in naturally occurring lithium brines. There is therefore a need for improved processes for the production of high purity lithium hydroxide and lithium carbonate, which are more efficient, avoid the need to use salar brines and minimise lithium losses.

### SUMMARY OF THE INVENTION

The present invention provides a process for the production of lithium hydroxide or lithium carbonate comprising:
(a) reacting lithium carbonate with hydrochloric acid to form a lithium chloride brine and carbon dioxide;
(b) adding a base to said brine to increase the pH of the brine and cause precipitation of divalent impurities;
(c) electrolysing the brine in an electrolyser after performing step (b);
(d) removing a portion of the catholyte from the electrolyser and (i) isolating lithium hydroxide from said catholyte or (ii) adding carbon dioxide to said catholyte to form lithium carbonate and isolating the lithium carbonate product;
(e) removing a portion of the anolyte from the electrolyser and reacting it with a carbonate salt to form lithium carbonate; and
(f) repeating steps (a)-(c) and using a portion of the lithium carbonate formed in step (e) in step (a) and/or as a base in step (b).

The process may further comprise isolating lithium hydroxide by crystallisation from the catholyte that is removed from the electrolyser and adding carbon dioxide to the spent liquor from the crystallisation step to form lithium carbonate, then using said lithium carbonate in step (a) or as a base in step (b). Advantageously, the carbon dioxide used for carbonation of the spent liquor from lithium hydroxide crystallisation or carbonation of the catholyte that is removed from the electrolyser may be the carbon dioxide formed in step (a), which avoids the need to use an external source of carbon dioxide.

The present invention also provides a process for the production of lithium hydroxide comprising:
(a) reacting lithium carbonate with hydrochloric acid to form a lithium chloride brine and carbon dioxide;
(b) adding a base to said brine to increase the pH of the brine and cause precipitation of divalent impurities;
(c) electrolysing the brine in an electrolyser after performing step (b);
(d) removing a portion of the catholyte from the electrolyser and isolating lithium hydroxide from said catholyte by crystallisation;
(e) adding carbon dioxide to a spent liquor from the crystallisation step to form lithium carbonate; and
(f) repeating steps (a)-(c) and using a portion of the lithium carbonate formed in step (e) in step (a) and/or as a base in step (b).

Advantageously, the carbon dioxide used in step (e) may be the carbon dioxide formed in step (a), which avoids the need to use an external source of carbon dioxide. The process may further comprise removing a portion of the anolyte from the electrolyser and reacting it with a carbonate salt to form lithium carbonate, and using said lithium carbonate in step (a) or as a base in step (b).

The two processes above are unified by the common inventive concept of performing a carbonation step on a waste stream in the process in order to form lithium carbonate, which is then recycled either as starting material for the process or used as a base in impurity precipitation step (b).

Additional preferred features of the processes of the invention are described below and are defined in the appended claims.

### BRIEF DESCRIPTION OF THE DRAWINGS

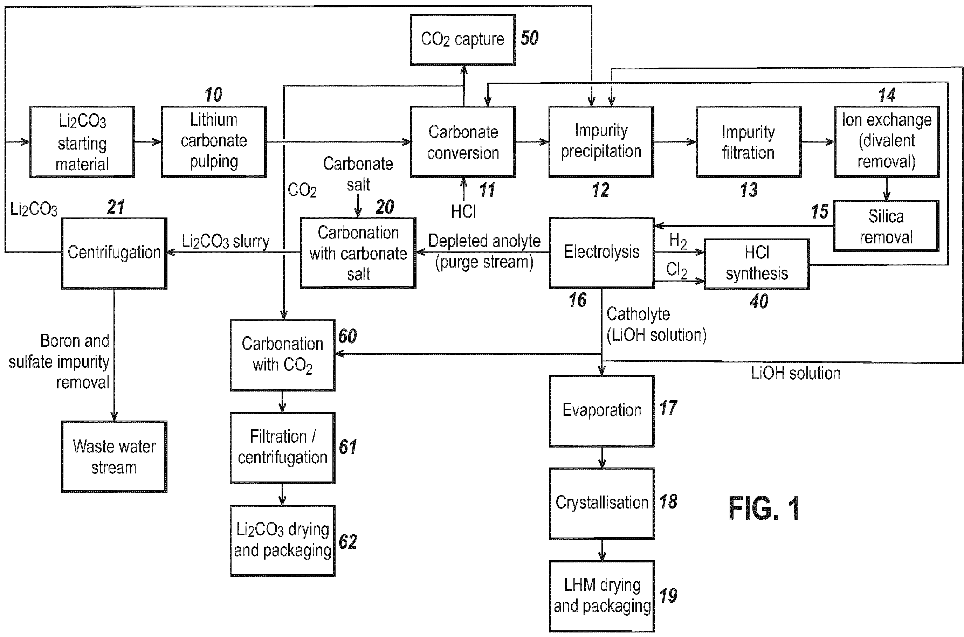

Figure 1 is a flowsheet representing an implementation of the first process of the invention, which involves a step of removing a portion of the anolyte from the electrolyser and reacting it with a carbonate salt to form lithium carbonate, and recycling this lithium carbonate for use as a starting material or as a base in the impurity precipitation step.

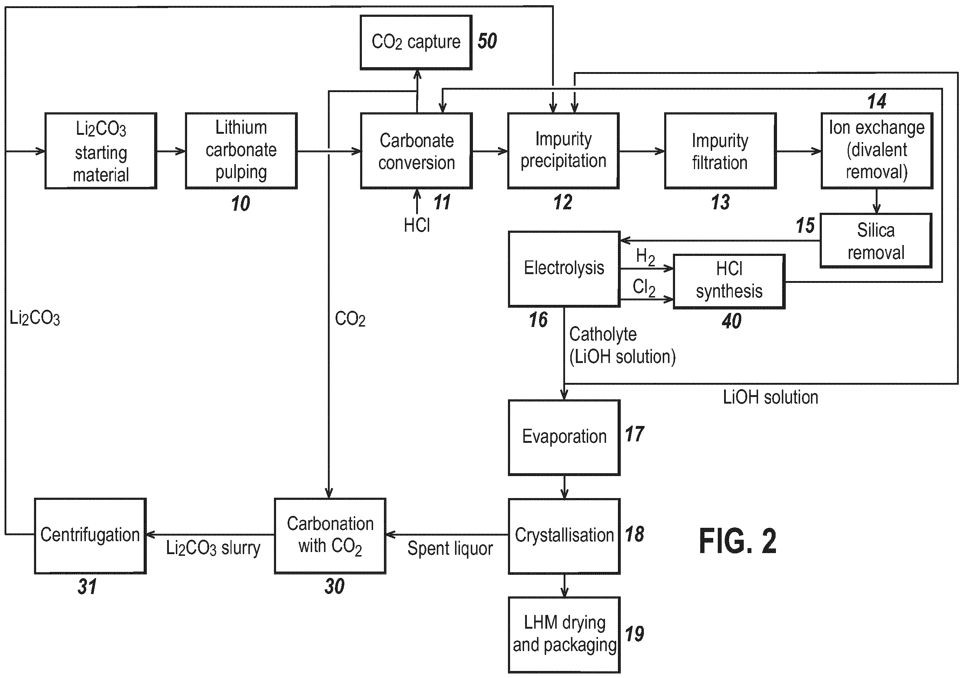

Figure 2 is a flowsheet representing an implementation of the second process of the invention, which involves a step of adding carbon dioxide to a spent liquor from the step of crystallising lithium hydroxide, in order to form lithium carbonate, and recycling this lithium carbonate for use as a starting material or as a base in the impurity precipitation step.

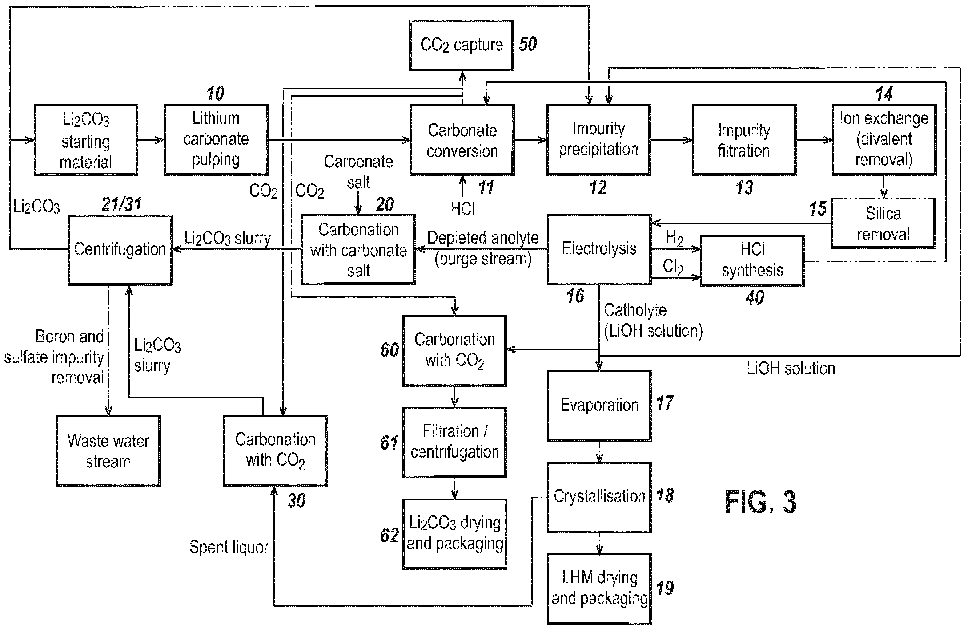

Figure 3 is a flowsheet depicting a process of the invention which is a combination of the first and processes depicted in Figures 1 and 2, wherein the process involves both a step of removing a portion of the anolyte from the electrolyser and reacting it with a carbonate salt to form lithium carbonate and a step of adding carbon dioxide to a spent liquor from the step of crystallising lithium hydroxide, in order to form lithium carbonate, and recycling the lithium carbonate formed in these steps for use as a starting material or as a base in the impurity precipitation step.

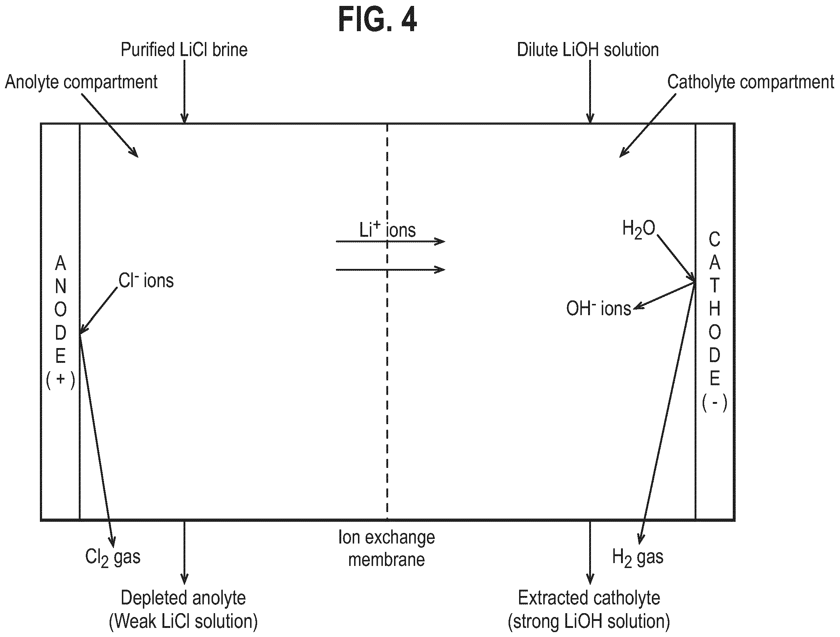

Figure 4 depicts a typical electrolyser used for the electrolysis of lithium chloride brines.

### DETAILED DESCRIPTION

The present invention provides particularly advantageous processes for the production of high purity lithium hydroxide or lithium carbonate. As used herein, the term "lithium hydroxide" encompasses lithium hydroxide monohydrate (LiOH.H₂O).

The processes involve the use of lithium carbonate as a starting material, which is reacted with hydrochloric acid (HCl) to produce a lithium chloride brine. HCl for this step may be obtained from the reaction of Cl₂ and H₂ gases that are produced by the electrolysis of the lithium chloride brine, which imparts efficiency to the process. There is often no use for HCl (or the Cl₂ and H₂ gases that are produced by the electrolysis) in processes which use lithium chloride brines as a starting material.

Advantageously, the processes of the invention incorporate steps which reduce lithium losses, in particular by recycling lithium from the depleted anolyte produced after electrolysis or from the crystallisation of lithium hydroxide, for use elsewhere in the process. As explained in further detail below, electrolysis produces a weak lithium chloride solution which is commonly referred to as a depleted anolyte. In the process of the invention, this depleted anolyte may be reacted with a carbonate salt in a carbonation step to produce lithium carbonate, which can then be isolated and recycled either as starting material or as a base in the impurity precipitation step which is performed to precipitate impurities from the lithium chloride brine that is formed by reacting lithium carbonate starting material with HCl. The isolation of solid lithium carbonate formed by reaction of the depleted anolyte with a carbonate salt typically takes place via centrifugation. The supernatant liquid from the centrifugation step contains impurities such as sulfate and boron impurities and these are removed from the process when the supernatant is discarded. This avoids the need to perform separate steps to remove these impurities elsewhere in the process and thus contributes to the overall efficiency of the process.

Alternatively, or additionally, the process of the invention may comprise carbonation of the spent liquor from the crystallisation of lithium hydroxide with carbon dioxide to form lithium carbonate. The lithium carbonate is then isolated, typically by centrifugation as described above, before being recycled for use either as starting material or as a base in the impurity precipitation step which is performed to precipitate impurities from the lithium chloride brine that is formed by reacting lithium carbonate starting material with HCl. Similarly to the process described above, this results in efficient recycling of the lithium in the process, contributing to the overall efficiency of the process and reduction of lithium losses. A particular advantage of the process using lithium carbonate as a starting material is that the reaction with HCl to form a lithium chloride solution yields high purity CO₂ as a by-product. This CO₂ can be used to carbonate the spent liquor from the lithium hydroxide crystallisation step, meaning that there is no need for an external supply of CO₂. This further contributes to the high efficiency of the overall process.

As explained above, the present invention provides a first process for the production of lithium hydroxide or lithium carbonate comprising:
(a) reacting lithium carbonate with hydrochloric acid to form a lithium chloride brine and carbon dioxide;
(b) adding a base to said brine to increase the pH of the brine and cause precipitation of divalent impurities;
(c) electrolysing the brine in an electrolyser after performing step (b);
(d) removing a portion of the catholyte from the electrolyser and (i) isolating lithium hydroxide from said catholyte or (ii) adding carbon dioxide to said catholyte to form lithium carbonate and isolating the lithium carbonate product;
(e) removing a portion of the anolyte from the electrolyser and reacting it with a carbonate salt to form lithium carbonate; and
(f) repeating steps (a)-(c) and using a portion of the lithium carbonate formed in step (e) in step (a) and/or as a base in step (b).

An illustrative implementation of the first process is depicted in Figure 1.

The present invention also provides a second process for the production of lithium hydroxide comprising:
(a) reacting lithium carbonate with hydrochloric acid to form a lithium chloride brine and carbon dioxide;
(b) adding a base to said brine to increase the pH of the brine and cause precipitation of divalent impurities;
(c) electrolysing the brine in an electrolyser after performing step (b);
(d) removing a portion of the catholyte from the electrolyser and isolating lithium hydroxide from said catholyte by crystallisation;
(e) adding carbon dioxide to a spent liquor from the crystallisation step to form lithium carbonate; and
(f) repeating steps (a)-(c) and using a portion of the lithium carbonate formed in step (e) in step (a) and/or as a base in step (b).

An illustrative implementation of the second process is depicted in Figure 2.

The above processes are especially beneficial since they minimise lithium losses. Preferably, the above processes result in lithium losses of below 5%. The term "lithium loss" refers to the % by mass of the lithium in the lithium carbonate starting material that is not converted to the desired lithium hydroxide or lithium carbonate product.

The lithium carbonate used as a starting material in step (a) may be technical grade lithium carbonate. Technical grade lithium carbonate typically refers to lithium carbonate of relatively high purity, but below that of battery grade lithium carbonate, which typically has a purity of above 99.5%. Technical grade lithium carbonate may have a purity in the range from about 98.0% to about 99.5%. It is commonly obtained from lithium-containing minerals such as spodumene and lepidolite. The lithium carbonate used as a starting material in step (a) may alternatively be recycled lithium carbonate. This may, for example, be lithium carbonate that is obtained from the conversion of lithium brine (e.g. a salar brine) by reaction of the brine with a carbonate salt such as sodium carbonate. This results in the formation of lithium carbonate that is not of battery grade and therefore cannot be used to manufacture cathode materials for lithium-ion batteries. The processes of the invention provide a use for such lithium carbonate as a starting material for the formation of battery grade lithium hydroxide and/or lithium carbonate.

As shown in Figures 1 and 2, as a first step the process may optionally involve a lithium carbonate pulping step **10.** This involves mixing the lithium carbonate starting material with water to form a slurry, prior to the addition of hydrochloric acid. The lithium carbonate starting material may be subjected to mechanical forces, such as pulverisation, prior to pulping in order to reduce the particle size of the lithium carbonate. It is not mandatory to perform a pulping step prior to addition of HCl, but doing so may produce a slurry with desirable rheological properties for feeding to the step of reaction with HCl.

The lithium carbonate is reacted with HCl to form a lithium chloride solution, which may be referred to as a lithium chloride brine. This carbonate conversion step **11** (corresponding to step (a) of the processes) involves adding lithium carbonate, either in solid form or in a slurry formed in a pulping step, to a solution of HCl. Preferably, a 5-38% HCl solution is used for this step, more preferably a 10-35% HCl solution. This produces a lithium chloride brine and CO₂ according to the reaction:

Li₂CO₃ + 2HCl → 2LiCl + CO₂ + H₂O

This process produces CO₂ gas of high purity. The crude CO₂ gas produced by this reaction may however contain trace amounts of HCl gas, which can be removed from the gas stream produced in this step prior to further use of the CO₂ as described below. The trace HCl gas may be removed by methods that will be familiar to those skilled in the art. For example, the trace amounts of HCl gas may be removed using alkaline scrubbing, a solid adsorbent or a desiccant bed.

The CO₂ produced by the reaction of lithium carbonate with HCl may be subjected to carbon capture **50** in order to prevent its release to the atmosphere, which it is desirable to prevent from an environmental perspective. However, advantageously at least a portion of it may be used to carbonate the spent liquor from lithium hydroxide crystallisation, in order to form lithium carbonate which can then be recycled to step (a) or used as a base in step (b), a described further below. Alternatively, at least a portion of the CO₂ produced in step (a) may be added to the catholyte that is removed from the electrolyser in order to convert the lithium hydroxide in the catholyte to lithium carbonate, as explained further below. This avoids the need for an external source of CO₂ and is a particular advantage of using lithium carbonate as a starting material.

The lithium chloride brine formed in carbonate conversion step **11** will typically contain a number of impurities that need to be removed or reduced prior to electrolysis. It is necessary to remove or reduce the level of these impurities in order to enable the production of high purity lithium hydroxide by electrolysis and subsequent crystallisation. In addition, certain metal impurities such as calcium, magnesium and iron have a tendency to precipitate as their insoluble hydroxide salts in the cation-selective membrane that is used in the electrolyser to separate the catholyte from the anolyte. This reduces the ability of lithium ions to pass through the membrane, thereby reducing the efficiency of electrolysis and the overall process, and shortens the life of the membrane.

Consequently, the lithium chloride brine is subjected to an impurity precipitation step **12** (corresponding to step (b) of the processes) in which a base is added to increase the pH of the brine, causing precipitation of divalent impurities. Preferably, in this step, the pH of the solution is raised to above about 10, more preferably in the range of about 10 to about 12, and most preferably in the range of about 10.5 to about 11.5. This may be achieved by adding any suitable base to increase the pH to the desired range, but the process of the invention preferably involves using lithium carbonate obtained from the carbonation of depleted anolyte from the electrolyser with a carbonate salt, as described in further detail below. Additionally or alternatively, the impurity precipitation step **12** may involve adding lithium hydroxide as a base. A lithium hydroxide solution may be obtained for this purpose from the catholyte that is removed from the electrolyser. The catholyte is removed from the electrolyser in order to crystallize the high purity lithium hydroxide product, but part of this solution may be used as a base in the impurity precipitation step to avoid the need to supply an external source of base for this step.

The addition of base in the impurity precipitation step causes precipitation of divalent impurities, in particular calcium and magnesium, as insoluble salts. These are typically precipitated as hydroxide salts, although calcium may precipitate as calcium carbonate. Additionally, iron hydroxide may also precipitate in this process. These insoluble salts are typically removed from the liquid stream by filtration, as indicated by the impurity filtration step **13** in Figures 1 and 2.

The liquid stream contains significantly reduced levels of divalent impurities following the impurity precipitation step, but in order to reduce divalent impurities to an even lower level, the brine may be subjected to an ion exchange step **14** after the impurity precipitation step in order to remove even more divalent impurities. This increases the purity of the brine and reduces the amount of interfering cations that can reduce the efficiency of electrolysis by accumulating in the membrane.

The use of ion exchange to remove divalent impurities is well-established in the art and can be achieved by passing the brine though ion exchange columns that contain ion exchange resins designed to remove divalent impurities. Such resins are readily available and include weakly acidic, macroporous cation exchange resins, for example Lewatit^{®} TP 208 and Lewatit^{®} TP 206 resins sold by Lanxess. Preferably, the ion exchange step removes divalent impurities selected from the group consisting of calcium, magnesium, strontium and barium. Preferably, the levels of magnesium and calcium ions are reduced to a level of <150 ppb, more preferably <100 ppb, by the ion exchange step. Even more preferably, the levels of calcium, magnesium, strontium and barium ions are reduced to a level of <150 ppb, more preferably <100 ppb, by the ion exchange step.

Optionally, the brine may also be subjected to a step that removes silica from the brine prior to electrolysis. This may take place after impurity precipitation and after the optional ion exchange step, as shown by silica removal step **15** in Figures 1 and 2. The silica removal preferably takes place by adsorption of silica from the brine. This may be achieved by contacting the brine with iron oxide, wherein the iron oxide adsorbs the silica from the brine. The iron oxide is preferably in powder form and the brine is passed through an adsorber vessel containing the iron oxide powder. For this purpose, an iron oxide absorber such as a Bayoxide^{®} iron oxide adsorber marketed by Lanxess may be used.

Following the impurity precipitation step and optional ion exchange and silica removal steps, the purified lithium chloride brine is electrolysed in an electrolyser to produce lithium hydroxide, as shown by electrolysis step **16** in Figures 1 and 2 (corresponding to step (c) of the processes). The electrolysis of lithium chloride brines to produce lithium hydroxide is well-established and those skilled in the art would be well aware of suitable electrolyser configurations to use.

A typical electrolyser arrangement is depicted in Figure 4. The electrolyser cell comprises an anolyte compartment, catholyte compartment and an ion exchange membrane between the anolyte compartment and catholyte compartment. The anolyte is in contact with an anode in the anolyte compartment and the catholyte is in contact with a cathode in the catholyte compartment. A source of electrical power, usually a DC source, is connected to the electrolyser cell to maintain a potential difference across the cell.

The catholyte is typically a weak solution of LiOH in water. The catholyte solution should not be overly strong in order to minimise precipitation of hydroxides in the cell and migration of hydroxyl ions through the membrane from the catholyte to the anolyte, which can cause the production of undesirable chlorine oxide by-products. The catholyte feed may suitably be a 1-7% LiOH solution in water.

The purified lithium chloride brine is fed to the anolyte compartment of the electrolyser and serves as the anolyte.

During the electrolysis process, chloride ions are oxidised to Cl₂ gas at the anode and water is reduced to hydroxide (OH⁻) ions at the cathode, along with the production of H₂ gas. The lithium (Li⁺) ions are attracted to the negatively charged cathode and cross the ion exchange membrane into the catholyte compartment, where they combine with OH⁻ ions formed from the splitting of water at the cathode to form LiOH. The passage of OH⁻ ions to the anolyte compartment is substantially prevented by the selective ion exchange membrane, which prevents the passage of anions such as hydroxide.

The ion exchange membrane is suitably a cation-selective exchange membrane that selectively allows the passage of lithium cations but prevents the passage of other cations and anions such as hydroxide and sulfate (SO₄²⁻). Those skilled in the art of electrolysis will be well aware of such membranes, many of which are available commercially, including those sold under the product names Nafion^{™}, Fumatech^{™}, Neosepta^{™}, Flemion^{™} and Aciplex^{™}.

It is especially preferred for the electrolyser to contain a membrane that is effective at preventing boron and sulfate impurities from passing from the anolyte to the catholyte compartment. Preferably, the electrolyser contains a membrane that allows electrolysis to be conducted on a lithium brine that contains up to 600 ppm boron. The use of a membrane that is impermeable to boron and sulfate ions is preferable because it can avoid the need to perform additional steps to remove boron and sulfate impurities prior to electrolysis. The use of a fluorinated cation exchange membrane is preferred (i.e. a cation exchange membrane that comprises a fluorinated polymer, preferably a perfluorinated polymer), especially a cation exchange membrane that comprises a fluorinated sulfonic acid polymer, most preferably a cation exchange membrane that comprises a perfluorinated sulfonic acid polymer. The membrane is preferably a bilayer membrane comprising a bilayer of a fluorinated polymer, preferably a fluorinated sulfonic acid polymer and most preferably a perfluorinated sulfonic acid polymer.

The above classes of membranes are preferred because they are highly impermeable to boron and sulfate anions. Such membranes may comprise fabric, such as PTFE fabric, in addition to the fluorinated polymer (e.g. fluorinated or perfluorinated sulfonic acid polymer). The fabric may provide structural reinforcement. Preferably, the process does not include a step of removing boron from the brine by ion exchange. If the level of boron in the brine is found to be too high for electrolysis, especially if it is above 1000 ppm, calcium hydroxide may be added to the brine prior to electrolysis to precipitate boron from the solution, which may be removed by filtration.

The overall reaction taking place in the electrolyser is:

2LiCl + 2H₂O → H₂ + Cl₂ + 2LiOH

The electrolysis process thus results in the production of a weak lithium chloride brine in the anolyte compartment (commonly referred to as a "depleted anolyte") as a result of lithium ions crossing to the catholyte compartment and oxidation of Cl⁻ to Cl₂. It also results in the production of a strong caustic solution of LiOH in the catholye compartment, where LiOH accumulates due to passage of lithium ions from the anolyte compartment and the formation of OH⁻ ions at the cathode.

The strong solution of LiOH in the catholyte compartment is removed and lithium hydroxide may be isolated from the catholyte by crystallisation. Those skilled in the art will be familiar with suitable methods of isolating lithium hydroxide by crystallisation. For example, the LiOH solution may be first be subjected to evaporation to remove water, as shown by evaporation step **17** in Figures 1 and 2. The solution may be heated in a vapour pre-heater and then low pressure steam introduced to cause evaporation of water, in order to concentrate the solution. Lithium hydroxide monohydrate (LiOH.H₂O) crystallises from the concentrated LiOH solution, as depicted by crystallisation step **18** in Figures 1 and 2. These crystals may be isolated by centrifugation to separate them from the spent liquor. This spent liquor may be further processed, as described below. Optionally, the LiOH.H₂O crystals may be redissolved in distilled water and recrystallised, to produce higher purity crystals.

The wet crystals may be dried using hot air and then packaged for onward distribution, as shown in step **19** in Figures 1 and 2.

In this way, battery grade lithium hydroxide monohydrate can be produced. Battery grade lithium hydroxide monohydrate is lithium hydroxide monohydrate with a purity of higher than 99.5%, preferably at least 99.9%. Such lithium hydroxide monohydrate is suitable for use in the manufacture of cathode materials for lithium-ion batteries.

The processes of the invention may be used to produce high purity lithium hydroxide monohydrate, as described above. However, this is not necessarily the final product of the processes since optionally, the lithium hydroxide monohydrate crystals may be reacted with CO₂ in order to produce battery grade lithium carbonate, i.e. lithium carbonate with a purity of higher than 99.5%, preferably at least 99.9%, as the final product of the processes. This may be achieved, for example, by dissolving the crystals in water and bubbling CO₂ through the solution, preferably at a temperature of at least 80 °C, such as a temperature in the range of 80-100°, more preferably 90-100 °C. This causes the formation of lithium bicarbonate (LiHCO₃) which decomposes to form Li₂CO₃ at the elevated temperature at which the reaction preferably takes place. As explained above, the reaction of HCl with the lithium carbonate starting material generates high purity CO₂ which can be used for this carbonation step. This is a particular advantage of lithium carbonate being used as a starting material, since a source of high purity CO₂ is provided by the reaction of lithium carbonate with HCl, avoiding the need for an external supply of CO₂ and enabling the process to be conducted in a circular fashion.

As an alternative to isolation of lithium hydroxide from the catholyte by crystallisation, CO₂ may be added to the catholyte in order to form lithium carbonate via the reaction of LiOH in the catholyte with CO₂, depicted as step **60** in Figure 1. This carbonation step may be performed in a similar way to that described above, for instance by bubbling CO₂ through the catholyte solution, preferably at a temperature of at least 80 °C, such as a temperature in the range of 80-100°, more preferably 90-100 °C. This causes the formation of lithium bicarbonate (LiHCO₃) which decomposes to form lithium carbonate (Li₂CO₃) at the elevated temperature at which the reaction preferably takes place. As explained above, the reaction of HCl with the lithium carbonate starting material generates high purity CO₂ which can be used for this carbonation step. Therefore, preferably, the carbon dioxide used in step (d) of the first process for reaction with the catholyte is the carbon dioxide formed in step (a). This is a particular advantage of lithium carbonate being used as a starting material, since a source of high purity CO₂ is provided by the reaction of lithium carbonate with HCl in step (a), avoiding the need for an external supply of CO₂ in order to perform carbonation of the catholyte.

The lithium carbonate produced by the above process precipitates out of the solution and may be isolated by filtration or centrifugation, as shown at step **61** in Figure 1. It can then be washed (e.g. with water) and dried, and optionally can be pulverised to the desired particle size, before being packaged (step **62** in Figure 1).

The lithium carbonate formed by reaction of the catholyte solution with CO₂ is usually of battery grade. Battery grade lithium carbonate is lithium carbonate with a purity of higher than 99.5%, preferably at least 99.9%. Such lithium carbonate is suitable for use in the manufacture of cathode materials for lithium-ion batteries. Therefore, although in this implementation of the process the starting material and the product are both lithium carbonate, the lithium carbonate product is of battery grade whereas the lithium carbonate starting material would usually not be. The process therefore facilitates the production of battery grade lithium carbonate from lower purity lithium carbonate.

As will be appreciated by those skilled in the art, the term "or" in the context of step (d) of the first is an inclusive "or" which encompasses performing one or other of the specified steps and also encompasses adding carbon dioxide to a portion of the catholyte that is removed from the electrolyser to form lithium carbonate as well as isolating lithium hydroxide from another portion of said catholyte, preferably by crystallisation.

In a preferred implementation of the process, as shown in Figures 1 and 2, some of the catholyte (lithium hydroxide solution) that is removed from the electrolyser is used as a base in step (b) of the process (i.e. the impurity precipitation step). This may be crude catholyte or spent liquor from the crystallisation process. This lithium hydroxide solution may be used instead of, or as well as, lithium carbonate formed from carbonation of the depleted anolyte with a carbonate salt, or lithium carbonate formed from carbonation of the spent liquor from crystallisation of lithium hydroxide with CO₂.

The H₂ and Cl₂ gases formed during electrolysis are preferably used to form hydrochloric acid in HCl synthesis step **40.** The H₂ and Cl₂ gases are reacted together with a catalyst to form HCl, in a manner which those skilled in the art will be familiar with. This HCl is preferably used as the hydrochloric acid in step (a) of the processes, where lithium carbonate is reacted with HCl to form a lithium chloride brine. This is especially advantageous because it avoids the need for an external source of HCl. Prior art processes starting from lithium chloride brines rather than lithium carbonate typically have no use for HCl within the process, whereas when starting from lithium carbonate, the HCl can be used for forming the lithium chloride brine.

The reaction of H₂ and Cl₂ to make HCl is exothermic and the heat generated in this reaction may be used to generate steam. This steam may be used to cause evaporation of water during the crystallisation of lithium hydroxide.

In the first process of the invention, depicted in Figure 1, a portion of the depleted anolyte is removed from the electrolyser in an anolyte purge stream. This depleted anolyte is a weak lithium chloride brine. The first process of the invention involves reacting this depleted anolyte with a carbonate salt to form lithium carbonate in carbonation step **20** (corresponding to step (e) of the first process). The carbonate salt may be an alkali metal carbonate or alkaline earth metal carbonate, such as Na₂CO₃, K₂CO₃, Rb₂CO₃, Cs₂CO₃, MgCO₃, CaCO₃, SrCO₃ or BaCO₃. Preferably, the carbonate salt is selected from Na₂CO₃, K₂CO₃, Rb₂CO₃, Cs₂CO₃, and most preferably it is Na₂CO₃ (sodium carbonate). The reaction of the depleted anolyte with the carbonate salt leads to the formation of lithium carbonate as a solid precipitate.

The lithium carbonate is preferably isolated by centrifugation from the anolyte purge stream after the carbonation step, in centrifugation step **21.** The supernatant liquid is separated from the solid lithium carbonate in the centrifugation step and is discarded. This supernatant liquid typically contains boron and sulfate impurities since they do not cross the ion exchange membrane in the electrolyser to any appreciable extent and remain in the anolyte. These boron and sulfate impurities are removed from the process in this step. Carbonation of the depleted anolyte thus facilitates removal of boron and sulfate impurities and advantageously avoids the need to perform separate boron and sulfate removal steps elsewhere in the process. Preferably, the process therefore does not comprise other steps to remove boron and sulfate impurities prior to electrolysis.

In the first process, steps (a)-(c) are repeated and a portion of the lithium carbonate formed in carbonation step (e) is used in step (a) or as a base in step (b). In other words, it may be used in step (a) as further starting material for the process, in which it is reacted with HCl to form a lithium chloride brine which is then subjected to the purification steps described above and electrolysed. The ability to recycle the lithium carbonate formed by carbonation of the depleted anolyte for use as a starting material in step (a) is a special feature of using lithium carbonate as the starting material for the process and is particularly advantageous as it results in a circular process in which lithium losses are minimised.

Alternatively, or additionally, the lithium carbonate may be used as a base in step (b) to raise the pH of the brine and cause precipitation of divalent impurities, as described above. The process may involve using some of the lithium carbonate formed in carbonation step (e) in step (a), as well as using some of it as a base in impurity precipitation step (b).

Those skilled in the art will appreciate that the process would typically be operated in a continuous manner. Therefore, reference herein to steps (a)-(c) being repeated encompasses the process being operated continuously, with further lithium carbonate starting material (either as fresh starting material or using lithium carbonate generated during the process as described herein) being added to keep the process running. Thus, the process of the invention is preferably a continuous process.

In the second process of the invention, depicted in Figure 2, carbon dioxide is added to a spent liquor from the crystallisation step to form lithium carbonate as shown by carbonation step **30.** When lithium hydroxide monohydrate is crystallised from solution, a spent liquor containing a high concentration of lithium hydroxide remains. This spent liquor is separated from the crystals, for example by centrifugation, and then reacted with CO₂ gas.

This carbonation step may be performed in a similar way to that described above, for instance by bubbling CO₂ through the spent liquor, preferably at a temperature of at least 80 °C, such as a temperature in the range of 80-100°, more preferably 90-100 °C. This causes the formation of lithium bicarbonate (LiHCO₃) which decomposes to form lithium carbonate (Li₂CO₃) at the elevated temperature at which the reaction preferably takes place. As explained above, the reaction of HCl with the lithium carbonate starting material generates high purity CO₂ which can be used for this carbonation step. Therefore, preferably, the carbon dioxide formed in step (a) is used in step (e) of the second process, to form lithium carbonate. This is a particular advantage of lithium carbonate being used as a starting material, since a source of high purity CO₂ is provided by the reaction of lithium carbonate with HCl in step (a), avoiding the need for an external supply of CO₂ in order to perform carbonation of the spent liquor. The overall process is therefore highly efficient.

In a similar manner to that described above in the context of the first process, the lithium carbonate produced by carbonation of the spent liquor is preferably isolated by centrifugation, as depicted by centrifugation step **31** in Figure 2. Steps (a)-(c) are repeated and a portion of the lithium carbonate formed in carbonation step (e) is used in step (a) or as a base in step (b). In other words, it may be used in step (a) as further starting material for the process, in which it is reacted with HCl to form a lithium chloride brine which is then subjected to the purification steps described above and electrolysed. The ability to recycle the lithium carbonate formed by carbonation of spent liquor for use as a starting material in step (a) is a special feature of using lithium carbonate as the starting material for the process and is particularly advantageous as it results in a circular process in which lithium losses are minimised.

Alternatively, or additionally, the lithium carbonate may be used as a base in step (b) to raise the pH of the brine and cause precipitation of divalent impurities, as described above. The process may involve using some of the lithium carbonate formed in carbonation step (e) in step (a), as well as using some of it as a base in impurity precipitation step (b).

As explained above, the process may be operated in a continuous manner and therefore reference to steps (a)-(c) being repeated in the second process encompasses the process being operated continuously, with further lithium carbonate starting material (either as fresh starting material or using lithium carbonate generated during the process as described herein) being added to keep the process running. Thus, the process of the invention is preferably a continuous process.

The process of the invention may involve forming lithium carbonate that is then used in step (a) or as a base in step (b) both by the carbonation of the depleted anolyte with a carbonate salt and carbonation of the spent liquor using CO₂. A process involving both of these carbonation and recycling steps is depicted in Figure 3.

In other words, the first process of the invention described above may further comprise the step of adding carbon dioxide to a spent liquor from the step of crystallising lithium hydroxide, in order to form lithium carbonate, as shown in carbonation step **30** in Figure 3. This may be performed in the manner described in detail above, including preferably isolating the lithium carbonate formed in this step by centrifugation, as depicted in centrifugation step **21** in Figure 3. The lithium carbonate formed by this process may then be used in step (a) or as a base in step (b). Preferably, the carbon dioxide used in the carbonation reaction is the carbon dioxide formed in step (a) by the reaction of lithium carbonate with HCl, which is advantageous for the reasons explained above.

Similarly, the second process of the invention described above may further comprise a step of reacting a portion the depleted anolyte that is removed from the electrolyser and reacting it with a carbonate salt, most preferably sodium carbonate, in order to form lithium carbonate, as shown in carbonation step **20** in Figure 3. The lithium carbonate formed in this step is preferably isolated by centrifugation (step **21** in Figure 3) and the supernatant liquid, which may contain boron and sulfate impurities, is discarded. The lithium carbonate may then be used in step (a), or as a base in step (b), as described above.

The processes of the invention may optionally further comprise the use of an evaporator, such as a flash evaporator, in order to remove water from the system. Those skilled in the art will be familiar with suitable evaporators to use for this purpose. The use of an evaporator may help to maintain the correct water balance in the system and prevent the build-up of water that would otherwise occur as a result of the processes being operated in a continuous manner with the addition of further lithium chloride brine via the reaction of fresh lithium carbonate starting material with HCl solution.

Certain embodiments of the invention are defined below.
1. A process for the production of lithium hydroxide or lithium carbonate comprising:
   (a) reacting lithium carbonate with hydrochloric acid to form a lithium chloride brine and carbon dioxide;
   (b) adding a base to said brine to increase the pH of the brine and cause precipitation of divalent impurities;
   (c) electrolysing the brine in an electrolyser after performing step (b);
   (d) removing a portion of the catholyte from the electrolyser and (i) isolating lithium hydroxide from said catholyte or (ii) adding carbon dioxide to said catholyte to form lithium carbonate;
   (e) removing a portion of the anolyte from the electrolyser and reacting it with a carbonate salt to form lithium carbonate; and
   (f) repeating steps (a)-(c) and using a portion of the lithium carbonate formed in step (e) in step (a) and/or as a base in step (b).
2. The process of embodiment 1, wherein step (a) comprises subjecting solid lithium carbonate to a pulping step in which the lithium carbonate is mixed with water to form a slurry prior to the addition of hydrochloric acid.
3. The process of embodiment 1 or embodiment 2, wherein a portion of the lithium carbonate formed in step (e) is used in step (a).
4. The process of any preceding embodiment, wherein a portion of the lithium carbonate formed in step (e) is used as a base in step (b).
5. The process of any preceding embodiment, wherein the carbonate salt is an alkali metal carbonate or an alkaline earth metal carbonate, preferably wherein the carbonate salt is sodium carbonate.
6. The process of any preceding embodiment, wherein the carbon dioxide used in step (d) is the carbon dioxide formed by addition of hydrochloric acid to lithium carbonate to form the lithium chloride brine and carbon dioxide in step (a).
7. The process of any preceding embodiment, wherein the lithium carbonate that is formed by adding a carbonate salt to a portion of the anolyte is isolated as a solid by centrifugation and the supernatant liquid is discarded.
8. The process of any preceding embodiment, wherein lithium hydroxide is isolated by crystallisation from the catholyte that is removed from the electrolyser.
9. The process of embodiment 8, wherein carbon dioxide is added to a spent liquor from the crystallisation step to form lithium carbonate, wherein said lithium carbonate is used in step (a) or as a base in step (b).
10. The process of embodiment 9, wherein said carbon dioxide is the carbon dioxide formed by addition of hydrochloric acid to lithium carbonate to form the lithium chloride brine and carbon dioxide.
11. A process for the production of lithium hydroxide comprising:
   (a) reacting lithium carbonate with hydrochloric acid to form a lithium chloride brine and carbon dioxide;
   (b) adding a base to said brine to increase the pH of the brine and cause precipitation of divalent impurities;
   (c) electrolysing the brine in an electrolyser after performing step (b);
   (d) removing a portion of the catholyte from the electrolyser and isolating lithium hydroxide from said catholyte by crystallisation;
   (e) adding carbon dioxide to a spent liquor from the crystallisation step to form lithium carbonate; and
   (f) repeating steps (a)-(c) and using a portion of the lithium carbonate formed in step (e) in step (a) and/or as a base in step (b).
12. The process of embodiment 11, wherein the carbon dioxide formed in step (a) is used in step (e) to form lithium carbonate.
13. The process of embodiment 11 or embodiment 12, wherein the lithium carbonate formed in step (e) is isolated as a solid by centrifugation before being used in step (a) or step (b).
14. The process of any preceding embodiment, wherein the H₂ and Clz formed during the electrolysis of the lithium chloride brine are used to form hydrochloric acid and said hydrochloric acid is reacted with the lithium carbonate in step (a) to form the lithium chloride brine that is subjected to electrolysis.
15. The process of embodiment 14, wherein the heat generated in the reaction between H₂ and Clz to form hydrochloric acid is used to generate steam, wherein the steam is used to cause evaporation of water during the crystallisation of lithium hydroxide.
16. The process of any preceding embodiment, wherein the brine is subjected to ion exchange to remove further divalent impurities prior to electrolysis, after the step of adding a base to the brine to cause precipitation of divalent impurities.
17. The process of embodiment 16, wherein the ion exchange step removes divalent impurities selected from the group consisting of calcium, magnesium, strontium and barium.
18. The process of any preceding embodiment, wherein silica is removed from the brine by adsorption prior to electrolysis.
19. The process of embodiment 19, wherein the brine is contacted with iron oxide and said iron oxide adsorbs silica from the brine.
20. The process of any one of embodiments 9-19, wherein the lithium hydroxide that is isolated by crystallisation is reacted with carbon dioxide to form lithium carbonate.
21. The process of any preceding embodiment, wherein a portion of the catholyte that is removed from the electrolyser is used as a base in step (b).
22. The process of any preceding embodiment, wherein the process does not include a step of removing boron from the brine by ion exchange.
23. The process of any preceding embodiment, wherein the anolyte and the catholyte in the electrolyser are separated by a fluorinated cation exchange membrane.
24. The process of embodiment 23, wherein the anolyte and the catholyte in the electrolyser are separated by a cation exchange membrane that comprises a fluorinated sulfonic acid polymer, preferably a cation exchange membrane that comprises a perfluorinated sulfonic acid polymer.

The invention has been described in detail above, including preferred features thereof. However, the invention is only limited by the appended claims and those skilled in the art that modifications may be made to the process described above whilst remaining within the scope of the appended claims.

## Claims

1. A process for the production of lithium hydroxide or lithium carbonate comprising:
(a) reacting lithium carbonate with hydrochloric acid to form a lithium chloride brine and carbon dioxide;
(b) adding a base to said brine to increase the pH of the brine and cause precipitation of divalent impurities;
(c) electrolysing the brine in an electrolyser after performing step (b);
(d) removing a portion of the catholyte from the electrolyser and (i) isolating lithium hydroxide from said catholyte or (ii) adding carbon dioxide to said catholyte to form lithium carbonate and isolating the lithium carbonate product;
(e) removing a portion of the anolyte from the electrolyser and reacting it with a carbonate salt to form lithium carbonate; and
(f) repeating steps (a)-(c) and using a portion of the lithium carbonate formed in step (e) in step (a) and/or as a base in step (b).

2. The process of claim 1, wherein step (a) comprises subjecting solid lithium carbonate to a pulping step in which the lithium carbonate is mixed with water to form a slurry prior to the addition of hydrochloric acid.

3. The process of claim 1 or claim 2, wherein a portion of the lithium carbonate formed in step (e) is used in step (a).

4. The process of any preceding claim, wherein a portion of the lithium carbonate formed in step (e) is used as a base in step (b).

5. The process of any preceding claim, wherein the carbonate salt is an alkali metal carbonate or an alkaline earth metal carbonate, preferably wherein the carbonate salt is sodium carbonate.

6. The process of any preceding claim, wherein the carbon dioxide used in step (d) is the carbon dioxide formed by addition of hydrochloric acid to lithium carbonate to form the lithium chloride brine and carbon dioxide in step (a)..

7. The process of any preceding claim, wherein lithium hydroxide is isolated by crystallisation from the catholyte that is removed from the electrolyser.

8. The process of claim 7, wherein carbon dioxide is added to a spent liquor from the crystallisation step to form lithium carbonate, wherein said lithium carbonate is used in step (a) or as a base in step (b).

9. The process of claim 8, wherein said carbon dioxide is the carbon dioxide formed by addition of hydrochloric acid to lithium carbonate to form the lithium chloride brine and carbon dioxide.

10. A process for the production of lithium hydroxide comprising:
(a) reacting lithium carbonate with hydrochloric acid to form a lithium chloride brine and carbon dioxide;
(b) adding a base to said brine to increase the pH of the brine and cause precipitation of divalent impurities;
(c) electrolysing the brine in an electrolyser after performing step (b);
(d) removing a portion of the catholyte from the electrolyser and isolating lithium hydroxide from said catholyte by crystallisation;
(e) adding carbon dioxide to a spent liquor from the crystallisation step to form lithium carbonate; and
(f) repeating steps (a)-(c) and using a portion of the lithium carbonate formed in step (e) in step (a) and/or as a base in step (b).

11. The process of claim 10, wherein the carbon dioxide formed in step (a) is used in step (e) to form lithium carbonate.

12. The process of any preceding claim, wherein the H₂ and Clz formed during the electrolysis of the lithium chloride brine are used to form hydrochloric acid and said hydrochloric acid is reacted with the lithium carbonate in step (a) to form the lithium chloride brine that is subjected to electrolysis.

13. The process of claim 12, wherein the heat generated in the reaction between H₂ and Clz to form hydrochloric acid is used to generate steam, wherein the steam is used to cause evaporation of water during the crystallisation of lithium hydroxide.

14. The process of any preceding claim, wherein the brine is subjected to ion exchange to remove further divalent impurities prior to electrolysis, after the step of adding a base to the brine to cause precipitation of divalent impurities.

15. The process of any preceding claim, wherein a portion of the catholyte that is removed from the electrolyser is used as a base in step (b).

## Amended claims

### Amended claims in accordance with Rule 137(2) EPC.

1. A process for the production of lithium hydroxide or lithium carbonate comprising:
(a) reacting lithium carbonate with hydrochloric acid to form a lithium chloride brine and carbon dioxide;
(b) adding a base to said brine to increase the pH of the brine and cause precipitation of divalent impurities;
(c) electrolysing the brine in an electrolyser after performing step (b);
(d) removing a portion of the catholyte from the electrolyser and (i) isolating lithium hydroxide from said catholyte or (ii) adding carbon dioxide to said catholyte to form lithium carbonate and isolating the lithium carbonate product;
(e) removing a portion of the anolyte from the electrolyser and reacting it with a carbonate salt to form lithium carbonate; and
(f) repeating steps (a)-(c) and using a portion of the lithium carbonate formed in step (e) in step (a) and/or as a base in step (b).

2. The process of claim 1, wherein step (a) comprises subjecting solid lithium carbonate to a pulping step in which the lithium carbonate is mixed with water to form a slurry prior to the addition of hydrochloric acid.

3. The process of claim 1 or claim 2, wherein a portion of the lithium carbonate formed in step (e) is used in step (a).

4. The process of any preceding claim, wherein a portion of the lithium carbonate formed in step (e) is used as a base in step (b).

5. The process of any preceding claim, wherein the carbonate salt is an alkali metal carbonate or an alkaline earth metal carbonate, preferably wherein the carbonate salt is sodium carbonate.

6. The process of any preceding claim, wherein the carbon dioxide used in step (d) is the carbon dioxide formed by addition of hydrochloric acid to lithium carbonate to form the lithium chloride brine and carbon dioxide in step (a)..

7. The process of any preceding claim, wherein lithium hydroxide is isolated by crystallisation from the catholyte that is removed from the electrolyser.

8. The process of claim 7, wherein carbon dioxide is added to a spent liquor from the crystallisation step to form lithium carbonate, wherein said lithium carbonate is used in step (a) or as a base in step (b).

9. The process of claim 8, wherein said carbon dioxide is the carbon dioxide formed by addition of hydrochloric acid to lithium carbonate to form the lithium chloride brine and carbon dioxide.

10. A process for the production of lithium hydroxide comprising:
(a) reacting lithium carbonate with hydrochloric acid to form a lithium chloride brine and carbon dioxide;
(b) adding a base to said brine to increase the pH of the brine and cause precipitation of divalent impurities;
(c) electrolysing the brine in an electrolyser after performing step (b);
(d) removing a portion of the catholyte from the electrolyser and isolating lithium hydroxide from said catholyte by crystallisation;
(e) adding carbon dioxide to a spent liquor from the crystallisation step to form lithium carbonate; and
(f) repeating steps (a)-(c) and using a portion of the lithium carbonate formed in step (e) as a base in step (b).

11. The process of claim 10, wherein the carbon dioxide formed in step (a) is used in step (e) to form lithium carbonate.

12. The process of any preceding claim, wherein the H₂ and Cl₂ formed during the electrolysis of the lithium chloride brine are used to form hydrochloric acid and said hydrochloric acid is reacted with the lithium carbonate in step (a) to form the lithium chloride brine that is subjected to electrolysis.

13. The process of claim 12, wherein the heat generated in the reaction between H₂ and Cl₂ to form hydrochloric acid is used to generate steam, wherein the steam is used to cause evaporation of water during the crystallisation of lithium hydroxide.

14. The process of any preceding claim, wherein the brine is subjected to ion exchange to remove further divalent impurities prior to electrolysis, after the step of adding a base to the brine to cause precipitation of divalent impurities.

15. The process of any preceding claim, wherein a portion of the catholyte that is removed from the electrolyser is used as a base in step (b).
